# EUROPEAN PATENT APPLICATION

(11) **EP 4 722 102 A1**
(43) Date of publication of application: **08.04.2026**
(21) Application number: 25200727.3
(22) Date of filing: 08.09.2025
(51) Int. Cl.: B64D 11/02, B64D 11/04, B64D 13/06, B64D 27/33, B64D 27/355, B64D 31/18, B64D 45/00, B64D 41/00

(54) **SYSTEMS AND METHODS FOR WATER MANAGEMENT ONBOARD AIRCRAFT**

(30) Priority: 01.10.2024 US 202418903296
(71) Applicant: Honeywell International Inc., Charlotte, NC 28202 (US)
(72) Inventor: MARCHE, Stephane, Charlotte, 28202 (US); KOTABA, Ondrej, Charlotte, 28202 (US)
(74) Representative: Ingrassia, Fisher & Lorenz UK Ltd.

(57) **Abstract**

Systems and methods are provided for water management onboard an aircraft. The water management systems include one or more storage devices onboard the aircraft, an outlet configured for rejecting water from the aircraft to an environment exterior to the aircraft, and a controller configured to, by one or more processors: receive aircraft data indicative of operating parameters of the aircraft and, optionally, environmental parameters exterior to the aircraft, determine, based on the aircraft data and one or more water management parameters, a volume of water to be rejected via the outlet, and reject the volume of water from the outlet.

## Description

### TECHNICAL FIELD

The present invention generally relates to aircraft systems, and more particularly relates to systems and methods for managing water onboard aircraft.

### BACKGROUND

Modern aircraft may have various water consumption systems that use water during operation of the aircraft such as cabin water systems. Conventionally, water required by water consumption systems has been maintained in water storage onboard the aircraft, and any excess water has been rejected or expelled from the aircraft as waste.

Depending on the flight and atmospheric conditions, storing and rejecting water may have various advantages and disadvantages. For example, storing large volumes of water onboard an aircraft increases aircraft weight which results in higher fuel consumption and emissions. However, rejecting water in environments with certain conditions may result in generation of contrails, ice, and/or fog.

Hence, there is a desire for systems and methods that can provide water management for an aircraft, such as determining times and volumes of water to be rejected that reduces disadvantages potentially associated therewith. Furthermore, other desirable features and characteristics of the present invention will become apparent from the subsequent detailed description and the appended claims, taken in conjunction with the accompanying drawings and the foregoing technical field and background.

### BRIEF SUMMARY

This summary is provided to describe select concepts in a simplified form that are further described in the Detailed Description. This summary is not intended to identify key or essential features of the claimed subject matter, nor is it intended to be used as an aid in determining the scope of the claimed subject matter.

In various examples, a water management system is provided for an aircraft that includes one or more storage devices onboard the aircraft, an outlet fluidically coupled to the one or more storage devices and configured for rejecting the water, ice, water vapor, or a combination thereof from the one or more storage devices to an environment exterior to the aircraft, and a controller configured to, by one or more processors: receive aircraft data indicative of operating parameters of the aircraft and, optionally, environmental parameters exterior to the aircraft; determine, based on the aircraft data and one or more water management parameters, a volume of the water, ice, water vapor, or combination thereof to be rejected via the outlet; and reject the volume of water, ice, water vapor, or combination thereof from the outlet.

In various examples, an aircraft is provided that includes one or more storage devices, an outlet fluidically coupled to the one or more storage devices and configured for rejecting water, ice, water vapor, or a combination thereof from the one or more storage devices to an environment exterior to the aircraft, a water generation system that produces water as a byproduct during operation thereof, a water consumption system that consumes the water, ice, water vapor, or the combination thereof during operation thereof, and a water management system configured to, by one or more processors: receive aircraft data indicative of operating parameters of the aircraft and, optionally, environmental parameters exterior to the aircraft, wherein the aircraft data includes requirements of the water consumption system and water production of the water generation system; determine, based on the aircraft data and one or more water management parameters, a volume of the water, ice, water vapor, or a combination thereof to be rejected via the outlet; and reject the volume of the water, ice, water vapor, or a combination thereof from the outlet.

In various examples, a method is provided for water management onboard an aircraft that includes receiving, with a water management system onboard the aircraft, aircraft data indicative of operating parameters of the aircraft, determining, with the water management system and based on the aircraft data, that an additional volume of water is or will be required during a flight of the aircraft and/or that an excess volume of water does or will exist onboard the aircraft that will not be required during the flight, and storing all or some of the additional volume of water or rejecting all or some of the excess volume of water from the outlet to an environment exterior to the aircraft.

Furthermore, other desirable features and characteristics of the system, aircraft, and method will become apparent from the subsequent detailed description and the appended claims, taken in conjunction with the accompanying drawings and the preceding background.

### BRIEF DESCRIPTION OF DRAWINGS

The present disclosure will hereinafter be described in conjunction with the following drawing figures, wherein like numerals denote like elements, and wherein:
FIG. 1 schematically represents a mobile platform and various components thereof including a water management system in accordance with an embodiment;
FIG. 2 is a dataflow diagram illustrating operation of the water management system of FIG. 1 in accordance with an embodiment;
FIG. 3 is a flowchart illustrating an exemplary method for water management onboard a mobile platform in accordance with an embodiment; and
FIGS. 4 and 5 are diagrams representing water rejection plans relative to flight phases of an aircraft in accordance with certain embodiments.

### DETAILED DESCRIPTION

The following detailed description is merely exemplary in nature and is not intended to limit the invention or the application and uses of the invention. As used herein, the word "exemplary" means "serving as an example, instance, or illustration." Thus, any embodiment described herein as "exemplary" is not necessarily to be construed as preferred or advantageous over other embodiments. All of the embodiments described herein are exemplary embodiments provided to enable persons skilled in the art to make or use the invention and not to limit the scope of the invention which is defined by the claims. Furthermore, there is no intention to be bound by any expressed or implied theory presented in the preceding technical field, background, brief summary, or the following detailed description.

For the sake of brevity, conventional techniques related to signal processing, data transmission, signaling, control, and other functional aspects of the systems (and the individual operating components of the systems) may not be described in detail herein. Furthermore, the connecting lines shown in the various figures contained herein are intended to represent example functional relationships and/or physical couplings between the various elements. It should be noted that many alternative or additional functional relationships or physical connections may be present in an embodiment of the present disclosure.

Systems and methods disclosed herein provide for water management for a mobile platform that is capable of, for example, rejecting excess water from the mobile platform at times determined based on various factors such as emissions of the mobile platform, persistent contrail generation, and onboard water consumption and/or generation systems. For convenience, the examples discussed herein are described in reference to the storage, use, and rejection of water (i.e., hydrogen dioxide in the liquid phase); however, in some examples the term "water" may be interchangeable with hydrogen dioxide in solid or gas phases (e.g., ice or water vapor) or combinations of more than one phase (e.g., ice in water), and therefore the systems and methods may be operable for the storage, use, and rejection of these other phases or combinations of phases.

The mobile platform may be any type of vehicle, such as but not limited to various types of aircraft. It should be noted that the term aircraft, as utilized herein, may include any manned or unmanned object capable of flight. Examples of aircraft may include, but are not limited to, fixed-wing aerial vehicles (e.g., propeller-powered or jet powered), rotary-wing aerial vehicles (e.g., helicopters), unmanned aerial vehicles (UAVs), delivery drones, etc. For convenience, the systems and methods will be described in reference to a manned airplane; however, as noted the systems and methods are not limited to such application.

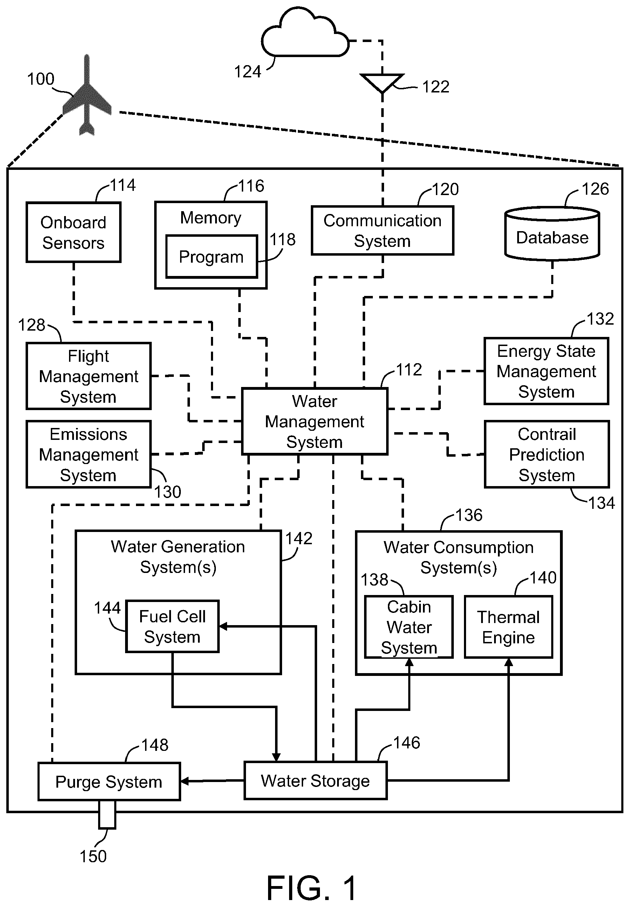

Referring now to FIG. 1, an aircraft 100, in this example an airplane, and certain systems thereof are illustrated in accordance with an exemplary and nonlimiting embodiment of the present disclosure. A water management system 112 may be utilized onboard the aircraft 100 as described herein. As schematically depicted in FIG. 1, the water management system 112 includes and/or is functionally coupled to the following components or subsystems, each of which may assume the form of a single device or multiple interconnected devices, including, but not limited to, onboard sensors 114; computer-readable storage media or memory 116; a communication system 120, one or more databases 126; one or more water consumption systems 136; one or more water generation systems 142, water storage 146 including one or more storage devices, and a purge system 148 fluidically coupled to an outlet 150 of the aircraft 100. The water management system 112 may optionally include and/or is functionally coupled to a flight management system (FMS) 128 (or flight control system), an emissions management system 130, an energy state management system 132, and/or a contrail prediction system 134. In some examples, the water management system 112 may be a component or feature of the flight management system 128.

The water storage 146 may include, for example, one or more storage devices (e.g., tanks, containers, etc.) configured to store water for storage and/or use by onboard systems including the water consumption systems 136. Although the water storage 146 includes the term "water," the water storage 136 may include, for example, one or more storage devices configured to store hydrogen dioxide in one or more different phases (e.g., water, ice, or water vapor). In some examples, the water storage 146 may include one or more storage devices configured to store a mixture or solution of water containing one or more materials other than hydrogen dioxide (e.g., low levels of contaminates, additives, etc.). The purge system 148 may be configured to reject, release, and/or expel excess water from the water storage 146 via the outlet 150 into an environment exterior to the aircraft 100. In various embodiments, one or more of the water management system 112, the FMS 128, the emissions management system 130, the energy state management system 132, and the contrail prediction system 134 may be components or modules of a single system or device.

Although schematically illustrated in FIG. 1 as a single unit, the individual elements and components of the water management system 112 can be implemented in a distributed manner utilizing any practical number of physically distinct and operatively interconnected pieces of hardware or equipment. When the water management system 112 is utilized as described herein, the various components of the water management system 112 will typically all be located onboard the aircraft 100.

In various examples, the water management system 112 includes a controller. The term "controller," as appearing herein, broadly encompasses those components utilized to carry-out or otherwise support the processing functionalities of the water management system 112. Accordingly, the controller can encompass or may be associated with any number of individual processors, flight control computers, navigational equipment pieces, computer-readable memories (including or in addition to the memory 116), power supplies, storage devices, interface cards, and other standardized components.

In various embodiments, the controller of the water management system 112 includes at least one processor, a communication bus, and a computer readable storage device or media. The processor performs the computation and control functions of the controller. The processor can be any custom made or commercially available processor, a central processing unit (CPU), a graphics processing unit (GPU), an auxiliary processor among several processors associated with the controller, a semiconductor-based microprocessor (in the form of a microchip or chip set), any combination thereof, or generally any device for executing instructions. The computer readable storage device or media may include volatile and nonvolatile storage in read-only memory (ROM), random-access memory (RAM), and keep-alive memory (KAM), for example. KAM is a persistent or non-volatile memory that may be used to store various operating variables while the processor is powered down. The computer-readable storage device or media may be implemented using any of a number of known memory devices such as PROMs (programmable read-only memory), EPROMs (electrically PROM), EEPROMs (electrically erasable PROM), flash memory, or any other electric, magnetic, optical, or combination memory devices capable of storing data, some of which represent executable instructions, used by the controller. The bus serves to transmit programs, data, status and other information or signals between the various components of the aircraft 100. The bus can be any suitable physical or logical means of connecting computer systems and components. This includes, but is not limited to, direct hard-wired connections, fiber optics, infrared, and wireless bus technologies.

The instructions may include one or more separate programs, each of which comprises an ordered listing of executable instructions for implementing logical functions. The instructions, when executed by the processor, receive and process signals from the sensors 114, perform logic, calculations, methods and/or algorithms, and generate data based on the logic, calculations, methods, and/or algorithms. Although the water management system 112 is described herein as including only one controller, embodiments of the aircraft 100 can include any number of controllers that communicate over any suitable communication medium or a combination of communication mediums and that cooperate to process the sensor signals, perform logic, calculations, methods, and/or algorithms, and generate data. In various embodiments, the controller includes or cooperates with at least one firmware and software program (generally, computer-readable instructions that embody an algorithm) for carrying-out the various process tasks, calculations, and control/display functions described herein. During operation, the controller may be programmed with and execute at least one firmware or software program, for example, a program 118, that embodies one or more algorithms, to thereby perform the various process steps, tasks, calculations, and control/display functions described herein.

The controller may exchange data with one or more external sources 124 to support operation of the water management system 112 in various embodiments. In this example, bidirectional wireless data exchange may occur via the communication system 120 over a communications network, such as a public or private network implemented in accordance with Transmission Control Protocol/Internet Protocol architectures or other conventional protocol standards. Encryption and mutual authentication techniques may be applied, as appropriate, to ensure data security.

In various embodiments, the communication system 120 is configured to support instantaneous (i.e., real time or current) communications between on-board systems, the water management system 112, and the one or more external sources 124. The communication system 120 may incorporate one or more antennas 122, transmitters, receivers, and the supporting communications hardware and software required for components of the water management system 112 to communicate as described herein. In various embodiments, the communication system 120 may have additional communications not directly relied upon herein, such as bidirectional pilot-to-ATC (air traffic control) communications via a datalink, and any other suitable radio communication system that supports communications between the aircraft 100 and various external source(s).

The memory 116 can encompass any number and type of storage media suitable for storing computer-readable code or instructions, such as the program 118, as well as other data generally supporting the operation of the water management system 112. As can be appreciated, the memory 116 may be part of the controller, separate from the controller, or part of the controller and part of a separate system. The memory 116 can be any suitable type of storage apparatus, including various different types of direct access storage and/or other memory devices.

A source of information suitable for operating one or more systems of the aircraft 100 may be part of the water management system 112. In certain embodiments, the source is one or more databases 126 employed to receive and store data, which may be updated on a periodic or iterative basis to ensure data timeliness. In various embodiments, these databases 126 may be available online and accessible remotely by a suitable wireless communication system, such as the communication system 120.

The sensors 114 supply various types of data and/or measurements to the water management system 112. In various embodiments, the sensors 114 supply, without limitation, one or more of: inertial reference system measurements providing a location, flight path angle (FPA) measurements, airspeed data, groundspeed data, vertical speed data, vertical acceleration data, altitude data, attitude data including pitch and roll measurements, yaw data, data related to ownship weight, time/date information, heading information, data related to atmospheric conditions, flight path data, flight track data, radar altitude data, geometric altitude data, wind speed and direction data.

The FMS 128 may include various components and devices configured to assist pilots in managing and automating various in-flight tasks such as, but not limited to, providing assistance with navigation, flight planning, performance management, autopiloting functions, and monitoring flight and system statuses. The FMS 128 may provide precise position data; calculate flight paths; guide aircraft along the flight paths using inputs from, for example, a global positioning system (GPS) receiver, inertial reference systems, and other navigation aids; allow pilots to input and modify flight plans, including waypoints, airways, and altitude profiles; generate alternate routes and update flight plans in real-time based on weather, air traffic control instructions, or other factors; determine aircraft performance parameters such as fuel consumption, speed, and altitude; work in combination with an autopilot system to automatically follow the flight plan, manage altitude changes, and perform approach and landing procedures; and provide alerts and guidance to the pilots in case of deviations or anomalies. In some examples, the FMS 128 may provide various information to the water management system 112 such as trajectory, altitude, and attitude of the aircraft 100.

The emissions management system 130 may include various components and devices configured to monitor, control, and reduce the environmental impact of the emissions of the aircraft 100. The emissions management system 130 may measure and record the levels of various pollutants emitted by the aircraft 100, such as carbon dioxide (CO₂), nitrogen oxides (NOₓ), carbon monoxide (CO), and particulate matter; analyze the collected emission data to assess the environmental impact and ensure compliance with international regulations and standards, such as those set by the International Civil Aviation Organization (ICAO); provides real-time feedback and recommendations to modify flight operations for reduced emissions, including adjustments to engine settings, flight paths, and altitudes to minimize fuel burn and pollutant output; and generate detailed reports on emission levels and efficiency improvements, which can be used for regulatory compliance, environmental certification, and internal performance tracking. The emissions management system 130 may operate in conjunction with other aircraft systems such as the FMS 125 and the engine control system to implement emission reduction strategies seamlessly during flight operations. In some examples, the emissions management system 130 may provide various information to the water management system 112 such as emissions measurements and predicted emissions.

The energy state management system 132 may include various components and devices configured to optimize the overall energy state of the aircraft 100, including kinetic and potential energy, throughout various phases of flight. In some examples, the energy state management system 132 may continuously or periodically assess the energy state of the aircraft 100 by monitoring parameters such as speed, altitude, and engine power settings; provide real-time recommendations for managing the aircraft's energy state efficiently, including suggestions for optimal climb, cruise, and descent profiles to minimize fuel consumption and maximize efficiency; and assist pilots in managing energy during descent and approach phases to ensure a smooth and efficient arrival, including determining optimal descent paths and speeds to reduce the need for excessive braking or thrust changes. The energy state management system 132 may operate in conjunction with other aircraft systems such as the FMS 128 to ensure that the flight plan is executed with optimal energy usage, adjusting routes and altitudes as needed to maintain the desired energy state. In some examples, the energy state management system 132 may provide various information to the water management system 112 such as drag generation requirements.

The contrail prediction system 134 may include various components and devices configured to detect, identify, and/or predict environments along a flight path that may promote formation of contrails, especially persistent contrails. As used herein, the term contrail (e.g., condensation trail) refers to a streak of cloud-like formation that may appear in the sky behind an aircraft. Contrails may form when hot, humid air from an aircraft's engines mixes with the colder, low-pressure air at high altitudes, causing the water vapor in the exhaust to condense into ice crystals or water droplets. Persistent contrails last for a relatively long period of time and can spread out to form larger cloud-like structures. As used herein, persistent contrails refer specifically to contrails that last for more than one hour, such as more than two hours, such as more than five hours, such as ten hours or more. In contrast, short-lived contrails dissipate relatively quickly (e.g., less than one hour) and do not significantly spread out. Contrails typically form at altitudes above 8,000 meters (26,000 feet) where the temperature is below - 40°C (-40°F). High humidity and low temperatures are conducive to their formation. Contrails can contribute to climate change by trapping heat in the Earth's atmosphere, similar to natural cirrus clouds, producing a warming effect known as "radiative forcing." In some examples, the contrail prediction system 134 provides various information to the water management system 112 such as current or predicted persistent contrail generation regions along a flight path. Although examples discussed herein represent the contrail prediction system 134 onboard the aircraft 100, the information produced by the contrail prediction system 134 may alternatively be received from one or more of the external sources 124.

The water consumption systems 136 may include any systems onboard the aircraft 100 that consume water during operation thereof and thereby reduce onboard water reserves. Nonlimiting examples of aircraft systems that may consume water include lavatory systems (e.g., sinks and toilets), galley systems (e.g., food preparation, beverages, etc.), humidification systems (e.g., operable to regulate cabin humidity), air conditioning and cooling systems (e.g., operable to regulate cabin temperature), and emergency systems (e.g., fire prevention systems). In the examples of FIG. 1, the aircraft 100 includes a cabin water system 138 and a thermal engine 140. The cabin water system 138 is configured to provide water to various onboard systems within the cabin of the aircraft 100, such as lavatory and galley systems. The thermal engine 140 is configured for producing thrust for propulsion of the aircraft 100. The thermal engine 140 may be operated by an engine control system (not shown) and may include a water injection system (not shown). For example, certain thermal engines include water injection systems configured to inject water or a mixture including water (e.g., with alcohol or methanol) into the engine's combustion chamber or intake air. This technique may be used to improve engine performance, improve engine efficiency, and/or reduce emissions.

The water generation systems 142 may include any systems onboard the aircraft 100 that produce water as a byproduct during operation thereof and thereby increase onboard water reserves. Notably, the water generation systems 142 are not necessarily configured to exclusively produce water, rather the water generation systems 142 may have, and likely have, other primary functions that inherently produce water as a byproduct of their normal operation. Nonlimiting examples of aircraft systems that may produce water include environmental control systems (e.g., operable to receive and condition outside air) and humidification systems (e.g., operable to regulate cabin humidity). In the example of FIG. 1, the aircraft 100 includes a fuel cell system 144 configured to generate electricity by an electrochemical reaction between hydrogen (e.g., hydrogen fuel) and oxygen (e.g., air) that produces water as a byproduct. Although the fuel cell system 144 is categorized as a water generation system 142 in FIG. 1, it should be understood that at times the fuel cell system 144 may consume water. For example, the fuel cell system 144 may use water during a decent phase of a flight to provide humidification to one or more fuel cells thereof. As such, although the primary function of the fuel cell system 144 is to produce electricity, it may also be considered to be both a water consumption system 136 and a water generation system 142.

In FIG. 1, solid arrows indicate water flow between the water storage 146 and the water consumption systems 136, the water generation systems 142, and the purge system 148. Dotted lines between the water management system 112 and the various onboard systems represent communication therebetween. In this specific example, the aircraft 100 includes both the thermal engine 140 and the fuel cell system 144. However, it should be understood that the systems and methods disclosed herein are not limited to aircraft that include both a thermal engine and a fuel cell system, and are instead applicable to various mobile platforms that include a thermal engine but not a fuel cell system, that include a fuel cell system but not a thermal engine, and that include neither a thermal engine nor a fuel cell system.

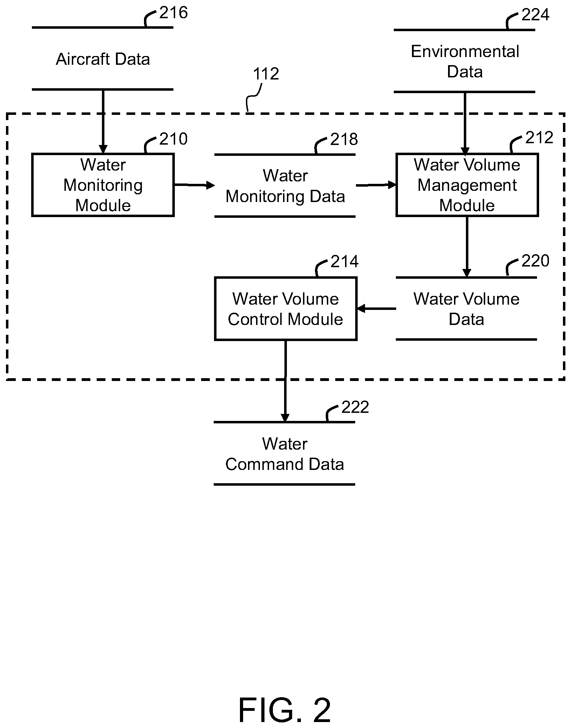

With reference to FIG. 2 and with continued reference to FIG. 1, a dataflow diagram illustrates elements of the water management system 112 of FIG. 1 in accordance with various embodiments. As can be appreciated, various embodiments of the water management system 112 according to the present disclosure may include any number of modules embedded within the controller thereof which may be combined and/or further partitioned to similarly implement systems and methods described herein. Furthermore, inputs to the water management system 112 may be received from other control modules (not shown) associated with the aircraft 100, and/or determined/modeled by other sub-modules (not shown) within the controller. Furthermore, the inputs might also be subjected to preprocessing, such as sub-sampling, noise-reduction, normalization, feature-extraction, missing data reduction, and the like. In various embodiments, the water management system 112 includes a water monitoring module 210, a water volume management module 212, and a water volume control module 214.

In various embodiments, the water monitoring module 210 receives as input aircraft data 216 generated by one or more onboard aircraft systems or received by one or more of the external sources 124. The aircraft data 216 may include, for example, various data indicating operating parameters of the aircraft 100. In some examples, the operating parameters of the aircraft 100 may include use and/or configurations of the water consumption systems 136, production and/or configurations of the water generation systems 142, sensor data generated by one or more of the sensors 22, such as sensors configured to monitor water volume within the water storage 146, flight parameters from the FMS 128, emissions information from the emissions management system 130, aircraft energy state information from the energy state management system 132, and/or contrail prediction information from the contrail prediction system 134. The water monitoring module 210 processes the aircraft data 216 to determine the water reserves onboard the aircraft 100. The water monitoring module 210 generates water monitoring data 218 that includes various data indicating, for example, a current volume of water in the water storage 146, rates of change of the volume the water in the water storage 146, use and/or consumption requirements of the water consumption systems 136, and/or the water production rates or capabilities of the water generation systems 142.

In various embodiments, the water volume management module 212 receives as input the water monitoring data 218 generated by the water monitoring module 210. In various examples, the water volume management module 212 receives as input environmental data 224 generated by one or more onboard aircraft systems or received by one or more of the external sources 124. The environmental data 224 may include, for example, various data indicating environmental parameters exterior to the aircraft 100 such as weather conditions in the environment surrounding the aircraft 100, in an environment along a flight path of the aircraft 100, and/or in an environment at an airport. The water volume management module 212 processes the water monitoring data 218 and, optionally, the environmental data 224, and manages onboard water reserves in accordance with one or more water management parameters.

In some examples, the water volume management module 212 may process the water monitoring data 218 to determine current water volume and/or rate of change thereof in the water storage 146, and compare this information to one or more preprogramed water volume thresholds. For example, if the water volume in the water storage 146 decreases below or is predicted to decrease below a minimum water volume threshold, the water volume management module 212 may determine that it would be desirable for the water generation systems 142 to produce additional water. As another example, if the water volume in the water storage 146 increases above or is predicted to increase above a maximum water volume threshold, the water volume management module 212 may determine that it would be desirable for a volume of excess water in the water storage 146 to be rejected from the aircraft 100. In various examples, the water volume thresholds may be based, at least in part, on the requirements, capabilities, and/or configurations of the water consumption systems 136 and/or the water generation systems 142.

In some examples, the water volume management module 212 may process the water monitoring data 218 to determine and/or predict the water requirements of the onboard systems, including water use and production rates and timing (e.g., during different flight phases). The water volume management module 212 may then actively manage water volume in the water storage 146 and/or generate a water management plan to be implemented during the flight of the aircraft 100. In such examples, the aircraft data 216 and/or the water management parameters may include, for example, drag generated by rejection of the excess water, thrust of the aircraft 100, fuel consumption due to the weight of the excess water, use and/or rate of use of the water consumption systems 136, phases of flight (e.g., taxi, take-off, climb, cruise, descent, landing), rates of climb or descent of the aircraft 100, a trajectory of the aircraft 100, an altitude of the aircraft 100, weather conditions, emissions of the aircraft 100, and/or production and/or rates of production of the water generation systems 142.

If a determination is made to reject excess water from the aircraft 100, the water volume management module 212 may optionally determine and schedule a time for when to reject the excess water. The timing of the rejection of the excess water may be based on various considerations including, for example, the effects on the aerodynamics of the aircraft 100 due to rejecting the excess water at various times of the flight of the aircraft 100, the water requirements of onboard systems at various times of the flight of the aircraft 100, weather conditions at various times of the flight of the aircraft 100. As an example, the water volume management module 212 may determine that it would be desirable to reject water from the aircraft 100 to reduce fuel consumption; however, the water volume management module 212 may also determine that immediate rejection of the water is undesirable due to, for example, a likelihood of persistent contrail generation, fog generation, or ice generation and therefore may schedule a later time for rejection of the water once conditions change.

In some examples, the water volume management module 212 may schedule the rejection of the excess water, at least in part, to modify an energy state of the aircraft 100 during flight. For example, the water volume management module 212 may schedule the rejection of the excess water during an approach phase of the flight to promote a stable approach.

In various examples, such as the example of FIG. 1, the aircraft 100 may include the thermal engine 140 (e.g., a gas turbine engine) with the water injection system. In such examples, water may be injected into the thermal engine 140 and rejected from the aircraft 100 in exhaust of the thermal engine 140. The water volume management module 212 may consider, for example, drag generated due to rejection of the excess water, thrust generated by the aircraft 100, and particle emissions in the exhaust (e.g., contrails generated by rejection of the excess water, NOx, fog, ice, etc.), and, optionally, other water management parameters to generate a water injection agenda indicating volumes of the excess water and times and methods for rejecting each of the volumes of the excess water during one or more phases of flight of the aircraft 100. In some examples, the water volume management module 212 may determine a likelihood of contrail generation and particle emissions based on a forecast retrieved from one or more of the external sources 124 (e.g., satellites, ground-based databases or sensors, other aircraft, etc.), based on a forecast generated by an onboard system using the environmental parameters received from onboard atmospheric sensors, or both. In some examples, the water volume management module 212 may determine a likelihood of contrail generation and particle emissions using a model derived using information such as, but not limited to, satellite imagery, ground camera imagery, and/or the aircraft data 216. In some examples, the water volume management module 212 may determine a likelihood of generating ice and/or fog on the airport surface, such as a runway, by rejecting water in certain atmospheric conditions. In some examples, the determination may be based, at least in part, on information received from air traffic services (e.g., Departure Clearance, ATIS, METAR, SNOTAM, etc.), and/or it could be determined based on atmospheric conditions sensed by onboard atmospheric sensors of the aircraft 100 (e.g. during descent or final approach infer temperature on ground by measuring temperature at current altitude and applying a model (e.g. ISA)).

The water volume management module 212 generates water volume data 220 that includes various data indicating, for example, volumes of water to be produced by one or more of the water generation systems 142 and, optionally, times for the production of the water, and/or volumes of excess water to be rejected and, optionally, times for the rejection of the excess water.

In various embodiments, the water volume control module 214 receives as input the water volume data 220 generated by the water volume management module 212. The water volume control module 214 processes the water volume data 220 and generates water command data 222 that includes various data indicating requests or commands intended to execute the instructions provided in the water volume data 220. The water volume control module 214 may then transmit the water command data 222 to the relevant onboard systems. For example, the water command data 222 may include an instruction for water generated by the fuel cell system 144 to be rejected, and the water command data 222 may be transmitted to the purge system 148 to initiate release of the specified volumes of water at the specific times from the outlet 150. As another example, the water command data 222 may include a request or command for excess water to be injected into the thermal engine 140 immediately or at specified times (e.g., during a specific phase of flight), and the water command data 222 may be transmitted to the engine control system such that the specified volumes of the excess water are injected into the thermal engine 140 immediately or at the specified times as instructed.

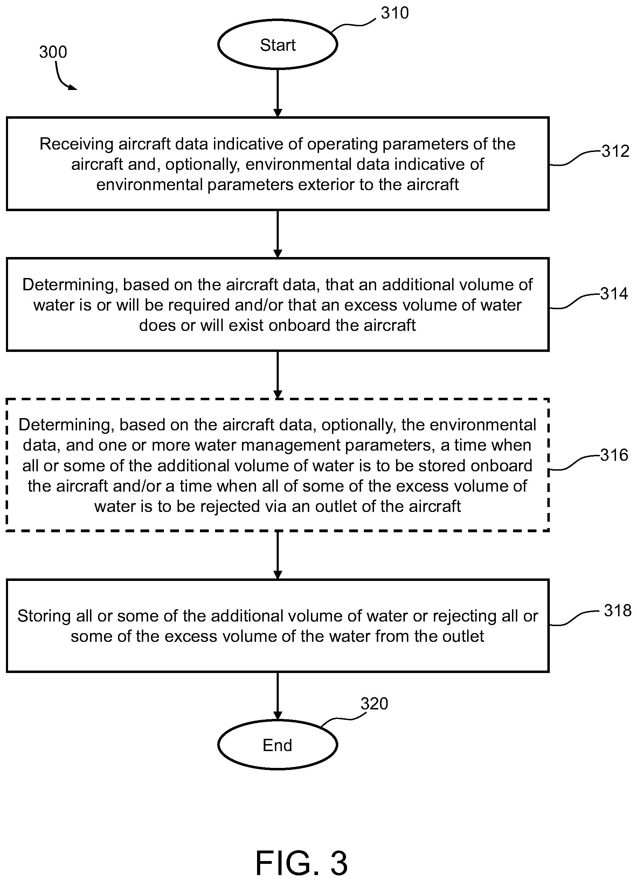

The systems disclosed herein, including the water management system 112, provide for methods of water management onboard mobile platforms. For example, FIG. 3 is a flowchart illustrating an exemplary method 300 for water management onboard an aircraft, such as the aircraft 100. As can be appreciated in light of the disclosure, the order of operation within the method 300 is not limited to the sequential execution as illustrated in FIG. 3, but may be performed in one or more varying orders as applicable and in accordance with the present disclosure. The method 300 may start at 310. In some examples, the method 300 may be scheduled to be performed (e.g., executed software) based on one or more predetermined events, and/or can be performed continuously or periodically during operation of the aircraft 100.

At 312, the method 300 may include receiving aircraft data indicative of operating parameters of the aircraft and, optionally, environmental parameters exterior to the aircraft. At 314, the method 300 may include determining, based on the aircraft data, that an additional volume of water is or will be required and/or that an excess volume of water does or will exist onboard the aircraft.

At 316, the method 300 may optionally include determining, based on the aircraft data and one or more water management parameters, a time when all or some of the additional volume of water is to be stored onboard the aircraft and/or a time when all of some of the excess volume of water is to be rejected via an outlet of the aircraft. In some examples, determining the time to store the additional volume of water and/or the time to reject the excess volume of water may include consideration of one or more water management parameters such as, but not limited to, drag generated by rejection of the excess water, thrust of the aircraft, fuel consumption due to the weight of the excess water stored onboard the aircraft, use of the water by systems onboard the aircraft, phases of flight, rates of climb or descent of the aircraft, a trajectory of the aircraft, an altitude of the aircraft, weather conditions, generation of water onboard the aircraft, emissions of the aircraft, and a likelihood of generating persistent contrails. In some examples, determining the time to store the additional volume of water and/or the time to reject the excess volume of water may include, at least in part, an intension to modify an energy state of the aircraft during flight. In some examples, the determined time to store the additional volume of water and/or the determined time to reject the excess volume of water may be immediate (i.e., time equal to zero), during specific times of the flight of the aircraft (e.g., phase of flight, stage of operation of a system onboard the aircraft, etc.), or prior to or after landing of the aircraft (e.g., on ground at an airport).

At 318, the method 300 may include storing all or some of the additional volume of water in the water storage or rejecting all or some of the excess volume of the water from the outlet. In examples that include step 316, the method 300 may include storing all or some of the additional volume of water or rejecting all or some of the excess volume of the water from the outlet at the determined time.

The method 300 may end at 320.

In some examples, method 300 may be performed by a water management function of a flight management system. In such examples, the water management function may provide a prediction of water consumption based on a water consumption model linked to an aircraft performance model. For example, the water consumption model may estimate water consumption as a function of thrust demand along the flight plan of the aircraft.

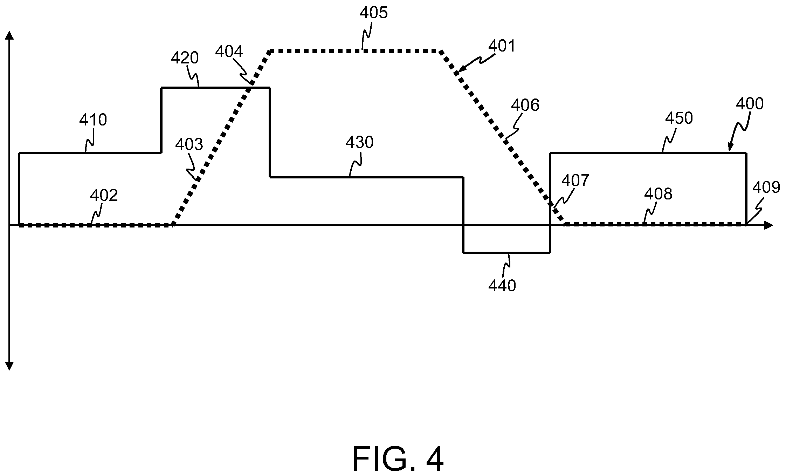

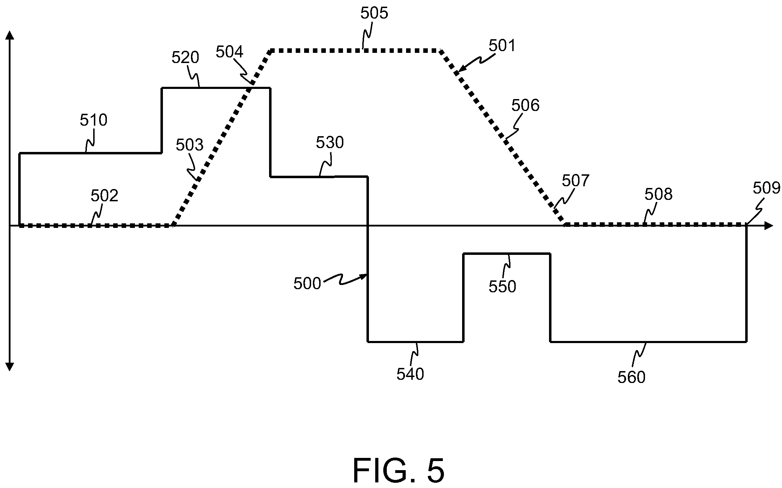

Referring now to FIGS. 4 and 5, and with continued reference to FIGS. 1-3, diagrams are provided that represent exemplary water rejection plans overlaid with flight phases of an aircraft, such as the aircraft 100. In these figures, a horizontal axis represents time, and a vertical axis represents water rejection volumes, wherein positive values on the vertical axis represent volumes of excess water to be rejected and negative values on the vertical axis represent volumes of excess water to be stored onboard the aircraft.

In FIG. 4, a first flight plan 401 is presented that includes an initial taxi phase 402, a take-off phase 403, a climb phase 404, a cruise phase 405, a descent phase 406, a landing phase 407, a final taxi phase 408, and a gate phase 409. A first water rejection plan 400 includes various volumes of excess water to be rejected or stored at various times based on competing factors associated with operation of the aircraft and environmental conditions. In this example, first volumes 410 of excess water are planned to be rejected during the initial taxi phase 402. This water rejection may be performed, at least partly, to reduce aircraft emissions (e.g., NOₓ). Second volumes 420 of excess water are planned to be rejected prior to and during the take-off phase 403 and the climb phase 404. This water rejection may be performed, at least partly, to reject excess water generated by the fuel cell system 144. Third volumes 430 of excess water are planned to be rejected during the cruise phase 405 and the descent phase 406. This water rejection may be performed, at least partly, to reject excess water to reduce emissions (e.g., carbon dioxide) and promote fuel efficiency by reducing onboard water weight. Fourth volumes 440 of excess water are planned to be stored during the descent phase 406. This water may be stored, at least partly, to provide water for humidification of the fuel cell system 144. Fifth volumes 450 of excess water are planned to be rejected during the landing phase 407 and the final taxi phase 408. This water rejection may be performed, at least partly, to reject excess water to reduce aircraft emissions (e.g., NOₓ).

In FIG. 5, a second flight plan 501 is presented that includes an initial taxi phase 502, a take-off phase 503, a climb phase 504, a cruise phase 505, a descent phase 506, a landing phase 507, a final taxi phase 508, and a gate phase 509. A second water rejection plan 500 includes various volumes of excess water to be rejected or stored at various times based on competing factors associated with operation of the aircraft and environmental conditions. In this example, first volumes 510 of excess water are planned to be rejected during the initial taxi phase 502. This water rejection may be performed, at least partly, to reduce aircraft emissions (e.g., NOₓ). Second volumes 520 of excess water are planned to be rejected prior to and during the take-off phase 503 and the climb phase 504. This water rejection may be performed, at least partly, to reject excess water generated by the fuel cell system 144. Third volumes 530 of excess water are planned to be rejected during the cruise phase 505. This water rejection may be performed, at least partly, to reject excess water to reduce emissions (e.g., carbon dioxide) and promote fuel efficiency by reducing onboard water weight. Fourth volumes 540 of excess water are planned to be stored during the cruise phase 505. This water may be stored, at least partly, to avoid generation of persistent contrails as the aircraft passes through an ice super saturated region. Fifth volumes 550 of excess water are planned to be stored during the descent phase 406. This water may be stored, at least partly, to provide water for humidification of the fuel cell system 144. Sixth volumes 560 of excess water are planned to be stored during the landing phase 407 and the final taxi phase 408. This water may be stored, at least partly, to avoid ice and/or fog generation due to weather conditions are the destination airport.

The systems and methods disclosed herein provide various benefits over certain existing systems and methods. For example, mobile platforms that include water management systems, such as the water management system 112, may be capable of actively and/or proactively managing water stored onboard in a manner that allows for promotion of, for example, reduced emissions, reduced fuel consumption, reduced onboard weight, improved control over aircraft energy states, and reducing contrail generation.

Techniques and technologies may be described herein in terms of functional and/or logical block components, and with reference to symbolic representations of operations, processing tasks, and functions that may be performed by various computing components or devices. Such operations, tasks, and functions are sometimes referred to as being computer-executed, computerized, software-implemented, or computer-implemented. In practice, one or more processor devices can carry out the described operations, tasks, and functions by manipulating electrical signals representing data bits at memory locations in the system memory, as well as other processing of signals. The memory locations where data bits are maintained are physical locations that have particular electrical, magnetic, optical, or organic properties corresponding to the data bits. It should be appreciated that the various block components shown in the figures may be realized by any number of hardware, software, and/or firmware components configured to perform the specified functions. For example, an embodiment of a system or a component may employ various integrated circuit components, e.g., memory elements, digital signal processing elements, logic elements, look-up tables, or the like, which may carry out a variety of functions under the control of one or more microprocessors or other control devices.

When implemented in software or firmware, various elements of the systems described herein are essentially the code segments or instructions that perform the various tasks. The program or code segments can be stored in a processor-readable medium or transmitted by a computer data signal embodied in a carrier wave over a transmission medium or communication path. The "computer-readable medium", "processor-readable medium", or "machine-readable medium" may include any medium that can store or transfer information. Examples of the processor-readable medium include an electronic circuit, a semiconductor memory device, a ROM, a flash memory, an erasable ROM (EROM), a floppy diskette, a CD-ROM, an optical disk, a hard disk, a fiber optic medium, a radio frequency (RF) link, or the like. The computer data signal may include any signal that can propagate over a transmission medium such as electronic network channels, optical fibers, air, electromagnetic paths, or RF links. The code segments may be downloaded via computer networks such as the Internet, an intranet, a LAN, or the like.

In this document, relational terms such as first and second, and the like may be used solely to distinguish one entity or action from another entity or action without necessarily requiring or implying any actual such relationship or order between such entities or actions. Numerical ordinals such as "first," "second," "third," etc. simply denote different singles of a plurality and do not imply any order or sequence unless specifically defined by the claim language. The sequence of the text in any of the claims does not imply that process steps must be performed in a temporal or logical order according to such sequence unless it is specifically defined by the language of the claim. The process steps may be interchanged in any order without departing from the scope of the invention as long as such an interchange does not contradict the claim language and is not logically nonsensical.

Furthermore, depending on the context, words such as "connect" or "coupled to" used in describing a relationship between different elements do not imply that a direct physical connection must be made between these elements. For example, two elements may be connected to each other physically, electronically, logically, or in any other manner, through one or more additional elements.

As used herein, the term "substantially" denotes within 5% to account for manufacturing tolerances. Also, as used herein, the term "about" denotes within 5% to account for manufacturing tolerances.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims

## Claims

1. A water management system for an aircraft, comprising:
one or more storage devices onboard the aircraft;
an outlet fluidically coupled to the one or more storage devices and configured for rejecting the water, ice, water vapor, or a combination thereof from the one or more storage devices to an environment exterior to the aircraft; and
a controller configured to, by one or more processors:
receive aircraft data indicative of operating parameters of the aircraft and, optionally, environmental parameters exterior to the aircraft;
determine, based on the aircraft data and one or more water management parameters, a volume of the water, ice, water vapor, or combination thereof to be rejected via the outlet; and reⱼ^{e}ct the volume of water, ice, water vapor, or combination thereof from the outlet.

2. The water management system of claim 1, wherein a water generation system onboard the aircraft generates water as a byproduct of the operation thereof, wherein the controller is configured to, by the one or more processors, generate a request or a command for a volume of water generated by the water generation system to be stored in the one or more storage devices or rejected from the outlet with consideration of the volume of water generated by the water generation system.

3. The water management system of claim 1, wherein the one or more water management parameters include drag generated by rejection of the water, ice, water vapor, or the combination thereof, thrust of the aircraft, fuel consumption due to the weight of the water, ice, water vapor, or the combination thereof stored onboard the aircraft, use of the water, ice, water vapor, or the combination thereof by systems onboard the aircraft, phases of flight, rates of climb or descent of the aircraft, a trajectory of the aircraft, an altitude of the aircraft, weather conditions, and/or generation of water onboard the aircraft.

4. The water management system of claim 1, wherein the controller is configured to, by the one or more processors:
determine, based on the aircraft data and one or more water management parameters, a time when the volume of water, ice, water vapor, or the combination thereof is to be rejected; and
rejecting the volume of water, ice, water vapor, or combination thereof from the outlet at the time.

5. The water management system of claim 4, wherein the controller is configured to, by the one or more processors, determine the volume of the water, ice, water vapor, or the combination thereof to be rejected and the time when to reject the volume of the water, ice, water vapor, or the combination thereof, at least in part, to intentionally modify an energy state of the aircraft during flight.

6. The water management system of claim 1, wherein at least some of the water, ice, water vapor, or the combination thereof is injected into a thermal engine and rejected from the aircraft in exhaust of the thermal engine, wherein the one or more water management parameters include drag generated by rejection of the water, ice, water vapor, or the combination thereof, thrust generated by the aircraft, and particle emissions in the exhaust, wherein the controller is configured to, by the one or more processors, generate, based on the aircraft data and the one or more water management parameters, a water injection agenda indicating volumes of the water, ice, water vapor, or the combination thereof and times for injecting each of the volumes of the water, ice, water vapor, or the combination thereof into the thermal engine during one or more phases of flight of the aircraft.

7. The water management system of claim 5, wherein the controller is configured to, by the one or more processors, determine a likelihood of persistent contrail generation and particle emission levels, or determine a likelihood of ice and/or fog generation, based on a forecast retrieved from a remote source, based on a forecast generated by an onboard system using the environmental parameters received from onboard atmospheric sensors, or both.

8. The water management system of claim **1,** wherein the aircraft includes a fuel cell system, and the controller is configured to, by the one or more processors, generate a water rejection plan that includes volumes of the water, ice, water vapor, or the combination thereof to be rejected or stored for each phase of a flight with consideration of water produced by the fuel cell system and water consumed by the fuel cell system.

9. The water management system of claim **1,** wherein the aircraft data includes current volume and/or rate of change thereof of the water, ice, water vapor, or the combination thereof in the one or more storage devices, wherein the one or more water management parameters include a minimum volume threshold and a maximum volume threshold, wherein the water management system is configured to, by the one or more processors:
monitor the current volume and/or rate of change thereof in the one or more storage devices;
compare the current volume and/or rate of change thereof in the one or more storage devices to the minimum volume threshold and the maximum volume threshold;
generate a request or command for water to be maintained in the one or more storage devices in response to a determination that the current volume in the one or more storage devices has decreased below or is predicted to decrease below the minimum volume threshold; and
generate a request or command for the water, ice, water vapor, or the combination thereof to be rejected from the aircraft in response to a determination that the current volume in the one or more storage devices has increased above or is predicted to increase above the maximum volume threshold.

10. A method for water management onboard an aircraft, comprising:
receiving, with a water management system onboard the aircraft, aircraft data indicative of operating parameters of the aircraft;
determining, with the water management system and based on the aircraft data, that an additional volume of water is or will be required during a flight of the aircraft and/or that an excess volume of water does or will exist onboard the aircraft that will not be required during the flight; and
storing all or some of the additional volume of water or rejecting all or some of the excess volume of water from the outlet to an environment exterior to the aircraft.

11. The method of claim 10, further comprising:
determining, with the water management system and based on the aircraft data and one or more water management parameters, a time when all or some of the additional volume of water is to be stored in the one or more storage devices and/or when all of some of the excess volume of water is to be rejected via the outlet of the aircraft; and
storing all or some of the additional volume of water in the one or more storage devices or rejecting all or some of the excess volume of water from the outlet to the environment exterior to the aircraft at the time.

12. The method of claim 10, further comprising:
determining, with the water management system, a likelihood of persistent contrail generation based on a forecast retrieved from a remote source, based on a forecast generated by an onboard system using environmental parameters received from onboard atmospheric sensors, or both;
generating, with the water management system and based on the aircraft data and the one or more water management parameters, a water injection agenda indicating volumes of the water and times for injected each of the volumes of the water into a thermal engine of the aircraft during one or more phases of flight of the aircraft, wherein the one or more water management parameters include drag generated by rejection of the water, thrust generated by the aircraft, particle emissions in exhaust, and the likelihood of persistent contrail generation; and
rejecting the volumes of water injected into the thermal engine from the aircraft in the exhaust of the thermal engine.

13. The method of claim 10, further comprising generating, with the water management system, a water rejection plan that includes volumes of water to be rejected or stored for each phase of the flight with consideration of water produced by a fuel cell system onboard the aircraft and water consumed by the fuel cell system.
